# EUROPEAN PATENT APPLICATION

(11) **EP 2 071 892 A2**
(43) Date of publication of application: **17.06.2009**
(21) Application number: 08021325.9
(22) Date of filing: 09.12.2008
(51) Int. Cl.: H04W 60/02

(54) **Mobile communication system, location registration period defining node, mobile terminal, and location registration method in mobile communication**

(30) Priority: 10.12.2007 JP 2007318375
(71) Applicant: NTT DoCoMo, Inc., Chiyoda-ku Tokyo 100-6150 (JP)
(72) Inventor: Machida, Keiji, Chiyoda-ku Tokyo 100-6150 (JP); Kobayashi, Hironari, Chiyoda-ku Tokyo 100-6150 (JP); Nakamura, Hiroshi, Chiyoda-ku Tokyo 100-6150 (JP)
(74) Representative: Henseler, Daniela

(57) **Abstract**

Even if the number of subscribers increases, such increased number of the subscribers can be handled by a mobile communication system without increasing the equipment of the system, so that the assignment of the radio resources should not be constrained due to excessive location registration. A MSC (200) of a mobile communication system (10) determines a location registration period for each of mobile terminals (300, 310, 320) according to subscriber information retained by HLR (101) or VLR (102). In this case, a relatively long location registration period is set for the mobile terminal (300, 310, 320) incorporated into a vending machine and having a weak mobility, as compared to the mobile terminal (300, 310, 320) that frequently moves. This eliminates the wasteful operation of performing the location registration in a uniform period with the mobile terminal (300, 310, 320) that frequently moves, so as to avoid the situation in which the assignment of the radio resources are constrained.

## Description

The present invention relates to mobile communication systems, location registration period defining nodes, mobile terminals, and location registration methods in mobile communication.

As is commonly known, each mobile terminal performs an operation for location registration (transmission of a location registration request) in a mobile communication system. The location registration is carried out as an initial location registration, when a mobile terminal has not been registered in the mobile communication system, yet. Then, when the mobile terminal moves to another location registration area (cell), the same location registration is carried out.

At the time of the initial location registration, a constant location registration period is set for the mobile terminal, so that there will be no occurrence of a disagreement between the location that has been registered in the mobile communication system and the actual location of the mobile terminal, since the initial location registration.

After the setting, the mobile terminal performs the location registration operation repeatedly, keeping such a location registration period.

In the conventional mobile communication system, the above-described location registration period is uniformly defined, regardless of the contents in the information of a subscriber who owns a mobile terminal.

According to a location registration control in the mobile communication system in compliance with the Third Generation Partnership Projects (3GPP) recommendations, the mobile terminal performs the location registration in a period designated by the mobile communication system continuously and repeatedly so that there will be no occurrence of a disagreement between the location that has been registered in the mobile communication system and the actual location of the mobile terminal, even if the mobile terminal does not move to another location registration area.

Meanwhile, in these years, there are increasing cases where a radio terminal device having a function of a mobile terminal is included in a beverage or cigarette vending machine, for example, to be used for inventory management or authentication of purchasers.

In the above-described case, the replenishment work that meets the actual inventory is enabled, instead of the replenishment of the sales items of the vending machine by solely depending on the person who is in charge of the management of the vending machine in an old way. A certain effect is also achieved for ensuring the security.

Such an applied utilization technology regarding the mobile terminal tends to spread to general-purpose equipment represented by electric home appliances in the near future.

The number of the mobile terminals accommodated in the mobile communication system is not limited to those carried by subscribers as before. There are also a large number of mobile terminals incorporated into vending machines or general-purpose equipment, as described above.

The number of the mobile terminals (the number of the subscribers, accordingly) incorporated into vending machines or the like as a latter case shows a tendency of dramatic increase. It is therefore easy to estimate that the increase in the number of the mobile terminals will exceed the increase in the traffic of the actual data flow.

To put in other words, the mobile communication systems of these days include not only mobile terminals frequently moving and having high mobility originally, such as cellular phones, but also mobile terminals incorporated into vending machines or the like having low mobility in usual operations or use states and having a weak probability of the mobile terminals being change in the range of service. In addition, the increase in the latter ones is outstanding.

In general operations, however, according to the conventional mobile communication system (the location registration control in the mobile communication system in compliance with 3GPP recommendations), the location registration is performed repeatedly in a uniformly defined period so as to be suited for the cellular phone having high mobility originally, regardless of the level of the mobility of each mobile terminal.

Accordingly, the location registration is excessively frequently carried out for a great number of mobile terminals with low mobility of hardly moving in reality. The inventors of the present are concerned that the assignment of radio resources will be constrained.

For the upcoming ubiquitous era, in consideration of the dramatic increase in the number of the mobile terminals accommodated in mobile communication systems, if the location registration is carried out uniformly regardless of the mobility level of each mobile terminal, this will require inappropriate excessive equipment to handle the communication traffic with data flowing in practice.

Specifically, the location registration period can be selected by setting any value at a periodic timer. Also, the location registration period can be changed at a later point of time than the originally set time.

Conventionally, there have been various proposals for setting or changing the location registration period individually in a mobile terminal.

As an example, JP 7-30960 A (Abstract, claim 1, paragraphs 0015, 0028, 0034, 0060, and 0066) proposes solving of the problem of the increase in the load of the whole system. To control the period of the location registration by using a periodic timer, when the shortest location registration period is uniformly set, the primarily unnecessary location registration process is generated thereby increasing the load of the whole system.

JP 7-30960 A also proposes a technique of comparing the results of the location registration of the past two times, and gradually shortening the location registration period until an accurate location registration is performed with respect to a cordless handset (mobile terminal) with a high movement speed and showing a degradation tendency, but conversely, gradually extending the location registration period as far as the results do not show the degradation tendency.

As another example, JP 11-341545 A (Abstract, paragraph 0007) makes a proposal for reducing the power consumption by suppressing the frequency of a location registration request from a mobile terminal device, so as to enable the mobile terminal device of a long talk time with a limited capacity of its battery.

As yet another example, JP 2002-142243 A (Abstract, paragraphs 0014, 0015, and 0024) discloses the change in the frequency of the location registration request according to the wideness of the location registration area so as to reduce the occurrence of the location registration request, when the wideness of the location registration area in which a mobile terminal is registered is changed.

As further another example, JP 11-234729 A (Abstract, paragraphs 0012 and 0013) discloses a mobile terminal, which issues a location registration request to each base transceiver station with respect to the reestablishment of Home Location Register (HLR), adds the location registration performing request information to the periodic location registration information column of the notification information to send from the base transceiver station to the mobile terminal, and upon receipt of the location registration performing request information, performs a location registration.

JP 11-23472 A also discloses grouping of the mobile terminals into several groups so as not to concentrate the location registration processes, making each of the groups perform the location registration in turn at slightly different timings, and adjusting the period of the location registration request by use of the location registration performing request information that is supplied to a location registration timer section.

The inventors of the present invention discovered that any of the above-described techniques is directed to selecting or changing of the period for location registration. However, none of the above-described documents is aware of the problem or tries to solve the problem in which a great number of mobile terminals that hardly move in reality are existent in the range of service and the location registration is carried out excessively frequently, so the assignment of radio resources is constrained.

It is therefore to be noted that none of the above-described documents suggests any method of solving the technical problem in which the location registration is carried out excessively frequently and the assignment of radio resources is constrained.

The present invention has been made in view of the above circumstances and provides a mobile communication system including: a subscriber information management device for managing subscriber information; and a location registration period defining node for determining a period of location registration based upon the subscriber information retained by the subscriber information management device, and supplying each of corresponding mobile terminals with a location registration period defining instruction for defining the period of the location registration that has been determined.

According to one aspect of the present invention, there is provided a mobile communication system comprising: a subscriber information management device for managing subscriber information; and a location registration period defining node for determining a period of a location registration based upon the subscriber information retained by the subscriber information management device, and supplying each of corresponding mobile terminals with a location registration period defining instruction for defining the period of the location registration that has been determined.

In the above communication system, the location registration period defining node determines a period of a location registration appropriate for the mobile terminal in the range of service, based upon the subscriber information on the subscriber information management device, and supplies each of the corresponding mobile terminals with a location registration period defining instruction for defining the period of the location registration that has been determined.

The subscriber information includes mobile terminal information indicative of the corresponding mobile terminal and contract information. Hence, information suited for the setting of the location registration period of the mobile device can be recognized based upon the contract information.

An example case is that the mobile device is mounted on a vending machine and in practice its use without being moved is recognized. In such a case, it is reasonable to set a long location registration period.

Meanwhile, it is also reasonable to set a long location registration period for another reason, in a special case where, even if the mobile terminal has similar mobility to the normal cellular phone or the like, the setting of a longer location registration period than usual contributes to the reduction in the occupancy of the radio resources and benefits are given by the charge and other services.

As in the above cases, various types of subscriber information can be supplied for determining the period of the location registration.

This enables the location registration period suited for each of the corresponding mobile terminals from many points of view.

In the above communication system, the location registration period defining node may be a MSC (Mobile Switching Center).

With such a configuration, the location registration period can be set in an appropriate manner, as a function of MSC, in the above mobile communication system.

Also, the location registration period defining node may be a VLR (Visitor Location Register).

In a case where each the above configurations is employed, when the period of the location registration is determined by referring to the subscriber information, the subscriber information retained on HLR or VLR may be acquired and referred to, in this type of mobile communication system.

In addition, in the above communication system, the location registration period defining node may generate the location registration period defining instruction so as to set a relatively long period of the location registration, when a relatively low frequency of movement of a mobile terminal is defined according to the subscriber information.

In the mobile communication system with such a configuration, when the frequency of movement of the mobile terminal is defined to be relatively low according to the subscriber information, the location registration period defining instruction may be generated to set a relatively long location registration period of the mobile terminal.

In this case, with respect to the mobile terminal that has a weak probability of movement, the wasteful location registration in a uniform period with the mobile terminal that often moves is omitted to avoid the situation in which the assignment of the radio resources is constrained.

According to another aspect of the present invention, there is provided a location registration period defining node comprising: means for determining a period of a location registration of each of corresponding mobile terminals based upon subscriber information managed by a given subscriber information management device; and means for supplying each of the corresponding mobile terminals with a location registration period defining instruction for defining the period of the location registration that has been determined by the means for determining.

At the above location registration period defining node, the location registration period determining means determines the period of the location registration of each of the mobile terminals, based upon the subscriber information managed by the subscriber information management device.

The location registration defining instruction for defining the location registration period that has been determined as described above is supplied to each of the corresponding mobile terminals by the location registration defining instruction supplying means.

An appropriate period of the location registration is set for each mobile terminal based upon the subscriber information. Therefore, even with respect to the mobile terminal that has a weak probability of movement, the wasteful location registration in a uniform period with the mobile terminal that often moves is omitted to avoid the situation in which the assignment of the radio resources is constrained.

The location registration period defining node according to the above configuration may be configured to be a MSC (Mobile Switching Center).

With such a configuration, the location registration period defining node eliminates the need for the provision of another device, thereby enabling the setting of the location registration period of the mobile terminal in an appropriate manner as one of the functions of MSC.

The location registration period defining node according to the above configuration may be configured to be a SGSN (Serving General packet radio service Support Node).

With such a configuration, the location registration period defining node eliminates the need for the provision of another device, thereby enabling the setting of the location registration period of the mobile terminal in an appropriate manner as one of the functions of SGSN.

The location registration period defining node according to the above configuration, wherein the means for determining may determine a relatively long period of the location registration, when a relatively low frequency of movement of a mobile terminal is set according to the subscriber information.

According to the location registration period defining node with such a configuration, an appropriate period of the location registration is set for each mobile terminal, based upon the subscriber information. Accordingly, even with respect to the mobile terminal that has a weak probability of movement, the wasteful location registration in a uniform period with the mobile terminal that often moves is omitted to avoid the situation in which the assignment of the radio resources is constrained.

According to yet another aspect of the present invention, there is provided a mobile terminal comprising: means for receiving a location registration period defining instruction for defining a period of a location registration from an upper node, and then setting a location registration performing period of the mobile terminal corresponding to given subscriber information according to the location registration period defining instruction; and means for performing the location registration in the location registration performing period corresponding to the subscriber information that has been set, after the location registration performing period is set by the means for receiving. The means for receiving comprises: means for determining the location registration period of the mobile terminal, based upon the subscriber information; and means for supplying the mobile terminal with a location registration defining instruction for defining the location registration period that has been determined by the means for determining.

In the above mobile terminal, the means for receiving the location registration period defining instruction and setting the location registration performing period receives supply of the location registration period defining instruction for defining the period of the location registration from an upper node such as a MSC or the like, and then sets the location registration performing period of its own device according to the subscriber information upon receipt of the location registration period defining instruction. The upper node such as a MSC includes: location registration period determining means for determining the period of the location registration of each of the corresponding mobile terminals based upon given subscriber information; and location registration defining instruction supplying means for supplying each mobile terminal with the location registration defining instruction for defining the location registration period that has been determined by the location registration period determining means.

According to further another aspect of the present invention, there is provided a location registration method in mobile communication, comprising determining a location registration performing period of each of corresponding mobile devices, based upon corresponding subscriber information.

In the above location registration method, a MSC (Mobile Switching Center) may determine the location registration performing period of each of the corresponding mobile terminals.

Accordingly, even with respect to the mobile terminal that has a weak probability of movement, the wasteful location registration in a uniform period with the mobile terminal that often moves is omitted to avoid the situation in which the assignment of the radio resources is constrained.

Meanwhile, the location registration method in mobile communication according to one aspect of the present invention determines the location registration performing period of each of the corresponding mobile terminal, based upon the corresponding subscriber information.

In the above the location registration method in mobile communication, the location registration performing period for each of the mobile terminals is determined based upon the subscriber information.

Accordingly, even with respect to the mobile terminal that has a weak probability of movement, the wasteful location registration in a uniform period with the mobile terminal that often moves is omitted to avoid the situation in which the assignment of the radio resources is constrained.

In addition, the location registration method in a mobile communication with such a configuration may employ an embodiment in which the MSC determines the location registration performing period of each of the corresponding mobile terminals.

The location registration method in a mobile communication with such a configuration eliminates the need for the provision of another device, thereby enabling the setting of the location registration period of the mobile terminal in an appropriate manner as one of the functions of MSC.

According to the present invention, even if the number of subscribers increases, such increased number of the subscribers can be handled by a mobile communication system without increasing the equipment of the system, so that the assignment of the radio resources should not be constrained due to excessive location registration.

Further objects, advantages and embodiments may be taken from the following description.

FIG. 1 illustrates a schematic view of a mobile communication system according to one aspect of the present invention;

FIG. 2 illustrates a block diagram indicative of a location registration period defining node according to one aspect of the present invention;

FIG. 3 illustrates a block diagram of the configuration of a mobile terminal according to one aspect of the present invention; and

FIG. 4 illustrates a communication sequence (of an initial location registration) in a mobile communication system according to another aspect of the present invention.

The embodiments of the present invention will now be described with reference to the drawings.

### MOBILE COMMUNICATION SYSTEM ACCORDING TO ONE ASPECT OF THE PRESENT INVENTION

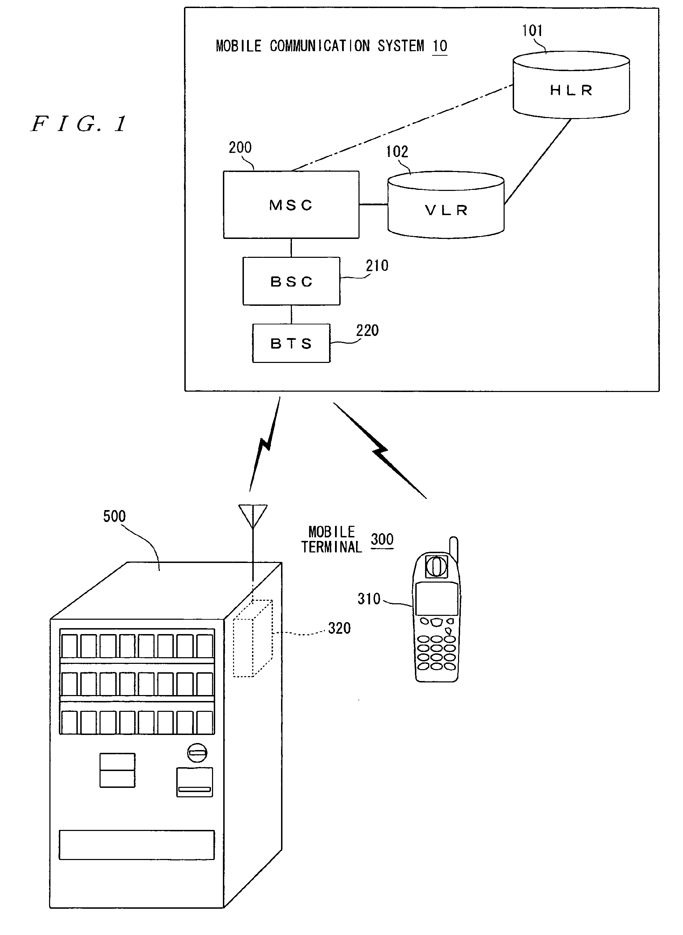

FIG. 1 illustrates a schematic view of a mobile communication system according to one aspect of the present invention.

A mobile communication system 10 as illustrated includes: a Home Location Register (HLR) 101 and a Visitor Location Register (VLR) 102, both of which are operable as a subscriber information management device for managing subscriber information; and a Mobile Switching Center (MSC) 200, serving as a location registration period defining node, for determining the period of the location registration based upon the subscriber information relating to each mobile terminal retained by the subscriber information management devices 101 and 102, and for supplying the corresponding mobile terminal 300 with a location registration period defining instruction for defining the determined period of the location registration.

Information supplied from the MSC 200 to the mobile terminal 300 is transmitted through a Base Station controller (BSC) 210 located under the control of the MSC 200 and a Base Transceiver Station (BTS) 220 located below the BSC 210, and is then transmitted over a radio link.

The mobile terminals 300 include ones with high mobility, which are recognized to be used while moving, such as a cellular phone 310, whereas the mobile terminals 300 include others with low mobility, which have a very weak possibility of moving in fact, such as a mobile terminal 320 incorporated into a vending machine 500.

In the mobile communication system 10, the MSC 200 serving as a location registration period defining node determines the period of the location registration suited for the mobile terminal 300 (310, 320) in the range of service, based upon the subscriber information in the VLR 102 serving as a subscriber information management device.

Accordingly, the period of the location registration suited for each of the corresponding mobile terminals 310 and 320 is determined.

According to one aspect of the present invention, the mobile communication system 10 is configured to fulfill the function of a location registration period defining node, as one of functions of the MSC 200, without the need of a separate device.

In addition, since the period of the location registration is determined by referring to the subscriber information retained by the HLR 101 and the VLR 102, each serving as a subscriber information management device, the subscriber information of the HLR 101 and the VLR 102 is utilized in the above system for determining the period of the location registration.

When the mobile communication system 10 is a mobile communication system in compliance with 3GPP recommendations, the HLR 101 is installed as a device for managing original record information of subscribers, whereas the VLR 102 functions as a subscriber information management device that is locally provided.

In the so-called VLR system, the subscriber information is downloaded from the HLR to the VLR of each mobile switching center (MSC in FIG. 1) for the range where the mobile terminal is existent, with the location registration of the corresponding mobile terminal used as a trigger, so that the location information and the subscriber information of the mobile terminal are managed.

As described above, the mobile terminal like a cellular phone has high mobility, so the location registration in accordance with its movement is frequently needed.

In contrast, the mobile terminal incorporated into a vending machine or general-purpose equipment has a weak probability of changing its existing location in usual operations. Therefore, the necessity of a location registration with its movement used as a trigger rarely occurs.

The level of mobility of the mobile terminal, as described above, can be learned based upon the subscriber information retained by the VLR 102 (accordingly, the subscriber information retained by the HLR 101 which is arranged at its upstream).

As to one technical idea, the level of mobility of the mobile terminal is determined based upon the subscriber information retained by the subscriber information management device such as the HLR 101 or the VLR 102, and then the period of the location registration appropriate for the mobility of the mobile terminal is set according to the determination.

As described above, the period of the appropriate location registration is set for each mobile terminal based upon the subscriber information. Therefore, even for the mobile terminal with a weak probability of movement such as the mobile terminal 320, the wasteful location registration period uniformly with the mobile terminal 310 that often moves is omitted to avoid the situation in which the assignment of the radio resources is constrained.

Herein, the subscriber information includes mobile terminal information representing the mobile terminal and contract information, so various items included in the subscriber information can be provided for the basis of determining the period of the location registration.

There is an example case where the mobile terminal is utilized for transmitting Point Of Sales (POS) information according to the contract with a goods-selling enterprise, depending on the above-mentioned contract information in the subscriber information.

In the above case, as described above with reference to FIG. 1, since the mobile terminal 320 is installed in the vending machine 500, the subscriber information, in some cases, exhibits that the mobile terminal 320 is used without being moved in fact. In such a case, it is reasonable to set a long period of the location registration.

On the other hand, even if the mobile terminal 320 turns out to have similar specifications to the normal cellular phone and have the similar contract conditions to the normal cellular phone with respect to the mobility, it is not necessarily reasonable to set the same location registration period with the normal cellular phone uniformly for that reason only.

This is because, for example, there is a conceivable special case where the period of the location registration is set longer than the normal cellular phone to actively contribute so as to the reduction in the loads of the radio resources, and benefits are given by the charge and other services.

### LOCATION REGISTRATION PERIOD DEFINING NODE ACCORDING TO ONE ASPECT OF THE PRESENT INVENTION

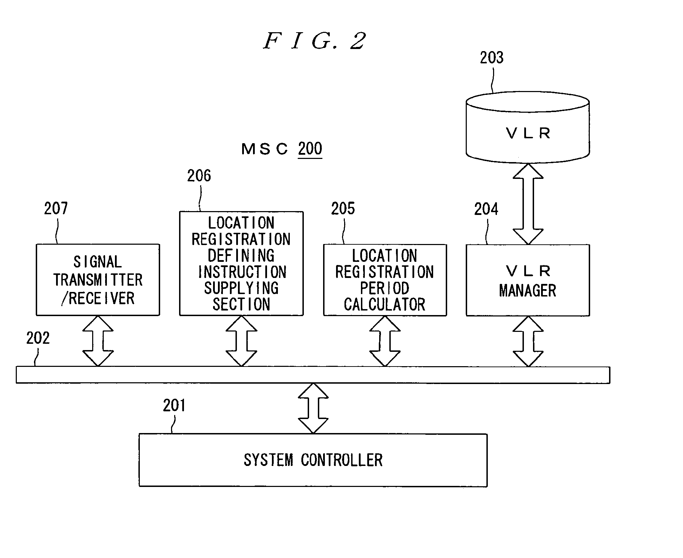

FIG. 2 illustrates a block diagram indicative of a location registration period defining node according to one aspect of the present invention.

The location registration period defining node illustrated in FIG. 2 is the MSC 200 in the above-described mobile communication system 10, as described above with reference to FIG. 1. A system controller 201 is connected to components of the location registration period defining node via a bus 202 so that the components are managed in an overall manner by the system controller 201.

A Visitor Location Register (VLR) 203 serving as a subscriber information management device is connected to a VLR manager 204, so information retained by the VLR 203 is managed by the VLR manager 204 or the retained information is read out and used.

In addition, the VLR 203 may be arranged outside the MSC 200 in the same manner with the VLR 102 of FIG. 1, or may be arranged inside the MSC 200.

A location registration period calculator 205 is provided as location registration period determining means for determining the period of the location registration of each mobile terminal, based upon the subscriber information retained and managed by the VLR 203, as described above.

A location registration defining instruction supplying section 206 is also provided as location registration defining instruction supplying means for supplying each mobile terminal with a location registration defining instruction for defining the location registration period that has been determined by the location registration period calculator 205.

Furthermore, a signal transmitter/receiver 207 is provided for transmitting and receiving various types of information that are objectives of transmission and reception.

In the MSC 200 serving as the location registration period defining node according to one aspect of the present invention, the corresponding period of the location registration of each mobile terminal is determined by the location registration period calculator 205 based upon the subscriber information managed by the VLR 203.

The location registration defining instruction for defining the location registration period that has been determined by the location registration period calculator 205 is supplied to each of the corresponding mobile terminals from the location registration defining instruction supplying section 206.

Referring back to FIG. 1, as is obvious from the signal transmission path, the location registration defining instruction from the location registration period calculator 205 to each of the mobile terminals 310 and the mobile terminal 320 is passed through the BSC 210 and the BTS 220.

The above-described operation of the MSC 200 sets an appropriate period of the location registration based upon the subscriber information on each mobile terminal. According to one aspect of the present invention, with respect to the mobile terminal that has a weak probability of movement, the wasteful location registration in a uniform period with the mobile terminal that often moves is omitted to avoid the situation in which the assignment of the radio resources is constrained.

Moreover, the MSC 200 functions as the above-described location registration period defining node, thereby eliminating the need of providing a separate device and allowing the location registration period of the mobile terminal to be set in an appropriate manner.

Referring now to FIG. 1 again, the mobile communication system 10 may be configured, as described above, such that the calculation of the location registration period in the MSC 200 (the location registration period calculator 205 therein) determines a relatively long period of the location registration by referring to the subscriber information, when the frequency of movement is defined to be relatively low like the mobile terminal 320 installed in the vending machine 500.

With the above-described location registration period defining node (the MSC 200), an appropriate location registration period is set for each mobile terminal based upon the subscriber information of each mobile terminal. Therefore, even with respect to the mobile terminal that has a weak probability of movement, the wasteful location registration in a uniform period with the mobile terminal that often moves is omitted to avoid the situation in which the assignment of the radio resources is constrained.

Specifically, various cases may be conceivable for how to consider the subscriber information to reflect on the discrimination of the period of the location registration. The technical idea thereof has been described with reference to FIG. 1.

### MOBILE STATION ACCORDING TO ONE ASPECT OF THE PRESENT INVENTION

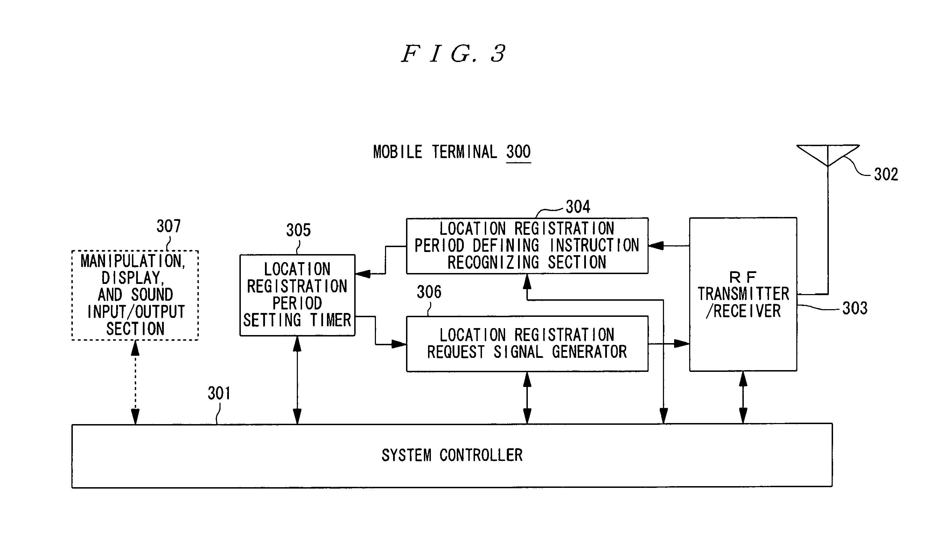

FIG. 3 illustrates a block diagram of the configuration of a mobile terminal according to one aspect of the present invention.

The mobile terminal, according to one aspect of the present invention, of FIG. 3 corresponds to the mobile terminal 300 described with reference to FIG. 1. Both the mobile terminal 310 and the mobile terminal 320 have the same configuration in the functionally conceptual block diagram of FIG. 3.

The mobile terminal 300 is configured such that respective components of the mobile terminal 300 are managed in an overall manner.

An RF transmitter/receiver 303, to which an antenna 302 is connected, is provided for transmitting and receiving signals of radio segments on the communication path of a mobile communication system. The location registration period defining instruction is separated from the signals received by the antenna 302 and is recognized by a location registration period defining instruction recognizing section 304.

A location registration period setting timer 305 sets the period of the location registration corresponding to the location registration period defining instruction, based upon the location registration period defining instruction that has been separated and recognized by the location registration period defining instruction recognizing section 304.

A location registration request signal generator 306 generates a location registration request signal by use of the period defined by the timer of the location registration period setting timer 305.

The location registration request signal that has been thus generated is transmitted from the RF transmitter/receiver 303 through the antenna 302 to the MSC 200 (directly to the BTS 220).

Meanwhile, when the mobile terminal 300 is the mobile terminal 310, a manipulation, display, and sound input/output section 307 is provided for performing the manipulation and display for verbal communication or mail exchange.

The mobile terminal 300 according to one aspect of the present invention receives the supply of the location registration period defining instruction by means of the antenna 302, the RF transmitter/receiver 303, the location registration period defining instruction recognizing section 304 and the location registration period setting timer 305, and serves as means for receiving a location registration period defining instruction and setting a location registration performing period of its own mobile terminal according to the location registration period defining instruction.

After the location registration performing period is set by the means for receiving the location registration period defining instruction and setting the location registration performing period by use of the location registration period setting timer 305, the location registration request signal generator 306, the RF transmitter/receiver 303, and the antenna 302, the location registration performing means for performing the location registration (operation of transmitting the location registration request signal) in the location registration performing period that has been set is carried out.

In the mobile terminal 300 according to one aspect of the present invention, means for receiving a location registration period defining instruction and setting a location registration performing period receives the supply of the location registration period defining instruction for defining the period of the location registration from its upper node such as, for example, the MSC 200, and then sets the location registration performing period according to the location registration period defining instruction.

After the location registration performing period is set in this manner, the location registration performing means (305, 306, 303, 302) performs the location registration in the location registration performing period that has been set.

Specifically, the mobile terminal according to one aspect of the present invention receives the supply of the location registration period defining instruction for defining the period of the location registration from its upper node (an example is the MSC 200 of FIG. 1 and FIG. 2) including the location registration period determining means for determining the period of the location registration of each mobile terminal based upon given subscriber information and location registration defining instruction supplying means for supplying each of the corresponding mobile terminals with the location registration defining instruction for defining the location registration period that has been determined by the location registration period determining means. Subsequently, the location registration period defining instruction is received, separated, and recognized.

The location registration period setting timer 305 sets the period of the location registration corresponding to the location registration period defining instruction, based upon the location registration period defining instruction corresponding to the above-described subscriber information that has been output from the RF transmitter/receiver 303 and then separated and recognized by the location registration period defining instruction recognizing section 304.

As a result, the location registration request signal generator 306 generates the location registration request signal by use of the period corresponding to the subscriber information, as described above, defined by the timer of the location registration period setting timer 305.

This allows the mobile terminal 300 the location registration (transmission of the location registration request signal) to be performed in an appropriate period set by the MSC 200 or the like.

Accordingly, with respect to the mobile terminal that has a weak probability of movement, the wasteful location registration in a uniform period with the mobile terminal that often moves is omitted to avoid the situation in which the assignment of the radio resources is constrained.

### MOBILE COMMUNICATION SYSTEM ACCORDING TO ANOTHER ASPECT OF THE PRESENT INVENTION

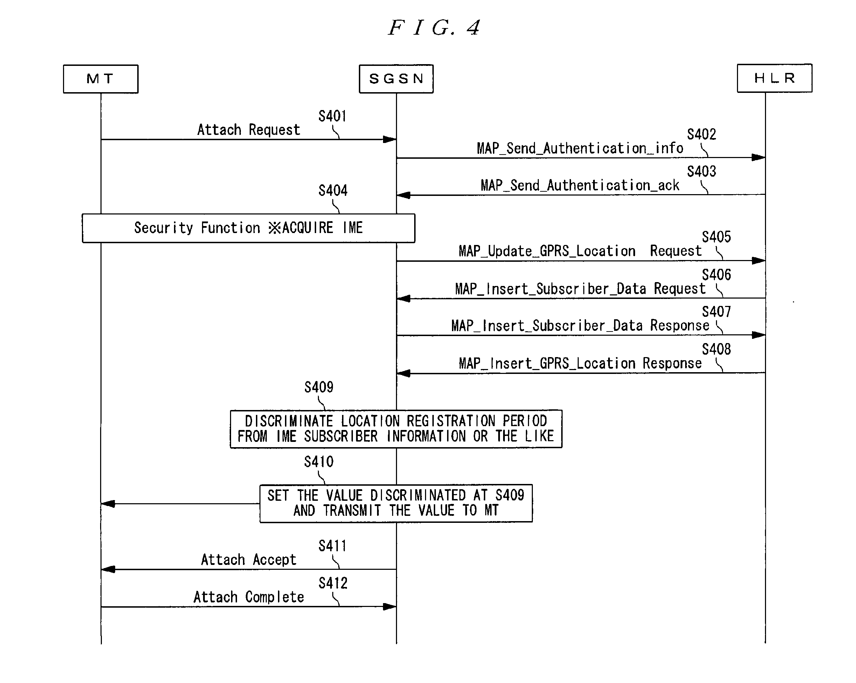

FIG. 4 illustrates a communication sequence in a mobile communication system according to another aspect of the present invention. Specifically, FIG. 4 illustrates a sequence diagram of determining a performing period of the location registration with respect to the initial location registration in a packet communication.

Attach Request, which is a location registration request, is transmitted to a node (SGSN: Serving General packet radio service Supporting Node) in the range of service from a mobile terminal (MT) (Step S401).

SGSN transmits MAP_Send_Authentication_info, which is an authentication information acquiring request of a subscriber, to a Home Location Register (HLR) serving as a subscriber's original record information management device (Step S402).

When there is MAP_Send_Authentication_ack, which is a response to a request of MAP_Send_Authentication_info of Step S402 (Step S403), Security Function is carried out between MT and SGSN (Step S404).

In the process of Security Function, SGSN acquires International Mobile Equipment Identity (IMEI) data.

Subsequently, SGSN transmits to HLR a location registration request, namely MAP_Update_GPRS Location Request relating to the corresponding mobile terminal (Step S405).

Meanwhile, HLR transmits MAP_Insert_Subscriber_Data Request signal, which is a subscriber information acquiring request (Step S406).

As to MAP_Insert_Subscriber_Data Request at Step S406, SGSN responds MAP_Insert_Subscriber_Data Response to HLR (Step S407).

As to MAP_Update_GPRS Location Request, which is a location registration request at Step S405, HLR gives MAP_Update_GPRS Location Response, which is a location registration completion report, to SGSN (Step S408).

At this stage, SGSN determines the location registration period, based upon IMEI and the subscriber information (Step S409).

Then, SGSN transmits to MT the location registration period defining instruction indicative of the location registration period that has been determined at Step S409 (Step S410).

SGSN issues Attach Accept, which is a location registration completion report, to MT (Step S411), and then MT responds Attach Complete, which is a receipt confirmation notification, to SGSN. Thus, the setting of a call is established (Step S412).

According to one aspect of the present invention, with respect to the mobile terminal that has a weak probability of movement such as a mobile terminal installed in a vending machine, the wasteful location registration in a uniform period with the mobile terminal that often moves is omitted for an efficient use of radio resources. This enables the establishment of a mobile communication system that is capable of handling the increase in mobile terminals existent in the range of service with the use of the current equipment.

## Claims

1. A mobile communication system (10) comprising:
a subscriber information management device (101, 102) for managing subscriber information; and
a location registration period defining node for determining a period of a location registration based upon the subscriber information retained by the subscriber information management device (101, 102), and supplying each of corresponding mobile terminals (300, 310, 320), with a location registration period defining instruction for defining the period of the location registration that has been determined.

2. The mobile communication system (10) according to claim 1, wherein the location registration period defining node is a MSC (Mobile Switching Center 200).

3. The mobile communication system (10) according to claim 1, wherein the location registration period defining node is a SGSN (Serving General packet radio service Support Node).

4. The mobile communication system (10) according to claim 1, wherein the subscriber information management device (101, 102) is a HLR (Home Location Register 101) or a VLR (Visitor Location Register 102, 203).

5. The mobile communication system (10) according to claim 1, wherein the location registration period defining node generates the location registration period defining instruction so as to set a relatively long period of the location registration, when a relatively low frequency of movement of a mobile terminal (300, 310, 320) is defined according to the subscriber information.

6. A location registration period defining node comprising:
means (205) for determining a period of a location registration of each of corresponding mobile terminals (300, 310, 320) based upon subscriber information managed by a given subscriber information management device (101, 102); and
means (206) for supplying each of the corresponding mobile terminals (300, 310, 320) with a location registration period defining instruction for defining the period of the location registration that has been determined by the means for determining (205).

7. The location registration period defining node according to claim 6 is configured to be a MSC (Mobile Switching Center 200).

8. The location registration period defining node according to claim 6 is configured to be a SGSN (Serving General packet radio service Support Node).

9. The location registration period defining node according to claim 6, wherein the means (205) for determining may determine a relatively long period of the location registration, when a relatively low frequency of movement of a mobile terminal (300, 310, 320) is set according to the subscriber information.

10. A mobile terminal (300, 310, 320) comprising:
means for receiving a location registration period defining instruction for defining a period of a location registration from an upper node, and then setting a location registration performing period of the mobile terminal (300, 310, 320) corresponding to given subscriber information according to the location registration period defining instruction; and
means (305, 306, 303, 302) for performing the location registration in the location registration performing period corresponding to the subscriber information that has been set, after the location registration performing period is set by the means for receiving,
the means for receiving comprising:
means (205) for determining the location registration period of the mobile terminal, based upon the subscriber information; and
means (206) for supplying the mobile terminal with a location registration defining instruction for defining the location registration period that has been determined by the means (205) for determining.

11. A location registration method in mobile communication, comprising determining a location registration performing period of each of corresponding mobile devices (300, 310, 320), based upon corresponding subscriber information.

12. The location registration method according to claim 11, wherein a MSC (Mobile Switching Center 200) determines the location registration performing period of each of the corresponding mobile terminals (300, 310, 320).
